# NEUE EUROPÄISCHE PATENTSCHRIFT

(11) **EP 0 212 337 B2**
(45) Veröffentlichungstag und Bekanntmachung des Hinweises auf die Entscheidung über den Einspruch: **26.06.1996**
(45) Hinweis auf die Patenterteilung: 18.04.1990
(21) Anmeldenummer: 86110283.8
(22) Anmeldetag: 25.07.1986
(51) Int. Cl.: A01F 12/00, A01D 41/12

(54) **Vorrichtung für Mähdrescher zum Verteilen der Spreu**
Device for harvester threshers for the distribution of chaff
Dispositif pour moissonneuse-batteuse pour la distribution de balle

(30) Priorität: 20.08.1985 DE 3529801; 13.12.1985 DE 3544157
(43) Veröffentlichungstag der Anmeldung: 04.03.1987
(73) Patentinhaber: BISO Bitter GmbH. & Co.KG., D-32289 Rödinghausen (DE)
(72) Erfinder: Scharf, Alois, D-4520 Melle 8 - St. Annen (DE)
(74) Vertreter: Gossel, Hans K., Dipl.-Ing.

(56) Entgegenhaltungen:
- CA-A- 1 179 567
- DD-A- 157 291
- DE-A- 2 620 875
- US-A- 1 569 882
- US-A- 2 010 287
- US-A- 2 862 536
- US-A- 3 276 451
- US-A- 3 860 010
- US-A- 4 137 923

## Beschreibung

Die Erfindung betrifft eine Vorrichtung für Mähdrescher zum Verteilen der Spreu nach dem Oberbegriff des Anspruchs 1 und eine Vorrichtung für Mähdrescher zum Verteilen der Spreu, bestehend aus zwei gegenläufig angetriebenen Rotoren mit mindestens zwei schaufelartigen Blättern.

In Mähdreschern, siehe z.B. US-A-4 137 923, sind unter den Strohschüttlern Kurzstroh- und Körnersiebe angeordnet, auf denen die Spreu ausgesiebt wird, die auf den Acker geblasen wird. Sind die Gebläse oder Spreuverteiler hinter den Siebkästen angeordnet, ist der Zugang zu diesen erschwert.

Eine Vorrichtung nach dem Oberbegriff des Anspruchs 1 ist aus der CA-A-1 179 567 bekannt.

Aufgabe der Erfindung ist es daher, eine Vorrichtung der eingangs angegebenen Art zu schaffen, die bei einfacher und schneller Anpassung an den Spreufluß einen einfachen und schnellen Zugang zu den Siebkästen ermöglicht.

Erfindungsgemäß wird diese Aufgabe bei einer Vorrichtung die Rotoren nach dem Oberbegriff des Anspruchs 1 durch die kennzeichnenden Merkmale des Anspruchs 1 gelöst.

In Anpassung an den jeweiligen die Siebe verlassenden Spreufluß, der von den Dreschbedingungen, wie Feuchtigkeitsgehalt und Windeinflüssen, abhängig ist, läßt sich der Rahmen mit den die Spreu verteilenden Rotoren durch Verschieben auf den Trägern derart verstellen, daß die Rotoren den richtigen Abstand zu den Siebkästen aufweisen. Die richtige Höhe der Rotoren relativ zu den Siebkästen läßt sich durch entsprechendes Verschwenken der den Rahmen mit den Rotoren tragenden Träger einstellen. Ist ein Zugang zu den Sieben erwünscht, können die oberen Enden der Träger gelöst werden, so daß sich diese nach unten verschwenken lassen. Da die Träger unterhalb des unteren Siebkastens angelenkt sind, wird durch ein derartiges Abklappen der Zugang zu den Siebkästen freigegeben.

Die Rotoren sind von einer gemeinsamen querverlaufenden Antriebswelle über Winkelgetriebe angetrieben und der Rahmen ist auf den Trägern über schlittenartige Führungen verschiebbar und um die Achse der Antriebswelle schwenkbar und in verschiedenen Schwenklagen relativ zu den Führungen feststellbar. Durch eine entsprechende Drehung des Rotorrahmens um die Achse der Antriebswelle und Fixierung läßt sich die richtige Neigung der Rotoren zu dem Spreufluß einstellen.

Zweckmäßigerweise sind die Rotoren in ihren oberen und einander zugewandten Bereichen von etwa konzentrischen und rechtwinkelig auf dem rückwärtigen Abdeckblech befestigten Stegblechen eingefaßt. Diese Stegbleche übernehmen eine gute Führung der zu verteilenden Spreu.

In weiterer Ausgestaltung der Erfindung ist vorgesehen, daß die Stegbleche an ihrer Auslaufkante gelenkig mit Leitblechen versehen sind, deren Neigungswinkel einstellbar ist. Durch diese Leitbleche läßt sich der gewünschte Austrittswinkel und damit auch die Auswurfweite einstellen.

Die Antriebswelle kann über eine Riemenscheibe durch Keilriemen angetrieben sein, deren Antrieb ihrerseits von dem Schüttler, Häcksler oder Häckslervorgelege abgeleitet ist. Um eine Drehzahlveränderung der Rotoren zu ermöglichen, können zu deren Antrieb auch Hydro- oder Elektromotoren vorgesehen sein.

Nach einem zweiten Vorschlag wird die Aufgabe bei einer Vorrichtung nach dem Oberbegriff des Patentanspruchs 6 erfindungsgemäß durch die kennzeichnenden Merkmale des Patentanspruchs 6 gelöst. Bei dieser erfindungsgemäßen Vorrichtung kann der Rahmen mit den Rotoren durch die schwenkbare Lagerung der diesen tragenden Träger an Schlitten, die in mit dem Mähdrescher verbundenen Schienen geführt sind, aus seiner Arbeitsstellung in eine Stellung verschwenkt werden, die den Zugang zu den Siebkästen ermöglicht. Die Vorrichtung weist drei mögliche Verstellungen auf, die unabhängig voneinander eingestellt werden können und eine optimale Anpassung an die jeweiligen Betriebsbedingungen erlauben: eine Höhenverschiebung des Rahmens auf den Trägern, eine Verschwenkung der Träger um die Schlitten und eine Längsverschiebung der Schlitten längs der mit dem Mähdrescher verbundenen Schienen.

In weiterer Ausgestaltung der Erfindung ist als weitere Verstellmöglichkeit eine Verschwenkung des die Rotoren tragenden Rahmens vorgesehen.

Weitere vorteilhafte Ausgestaltungen der Erfindung sind Gegenstand weiterer Unteransprüche.

Die erfindungsgemäßen Vorrichtungen können nicht nur als Anbaugeräte für Mähdrescher mit Hordenschüttler und Strohhäcksler verwendet werden, sondern sie eignen sich auch für die Verteilung der Spreu von Mähdreschern mit Axialtrommelschüttlern, mit Mehrtrommelschüttlern und grundsätzlich auch für alle Mähdrescher ohne Häcksler.

Ausführungsbeispiele der Erfindung werden nachstehend anhand der Zeichnung näher erläutert. In dieser zeigt
- Fig. 1: eine Seitenansicht der Vorrichtung zum Verteilen der Spreu in ihrem an einem Mähdrescher angebauten Zustand in schematischer Darstellung,

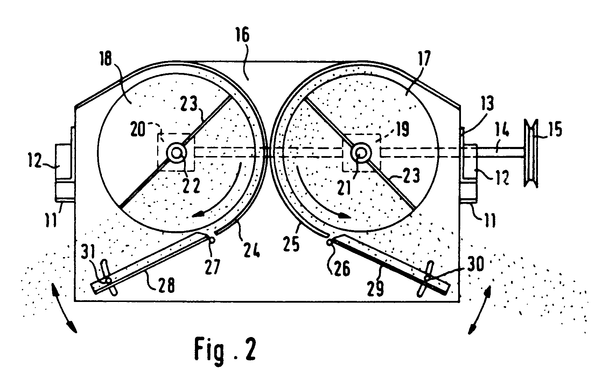

- Fig. 2: eine Draufsicht auf die Vorrichtung in Richtung des Pfeils X in Fig. 1,
- Fig. 3: eine Seitenansicht einer zweiten Ausführungsform der Vorrichtung zum Verteilen der Spreu in ihrem an einem Mähdrescher angebauten Zustand in schematischer Darstellung,
- Fig. 4: eine Seitenansicht der Vorrichtung nach Fig. 3 im hochgeschwenkten Zustand,
- Fig. 5: eine Seitenansicht der Vorrichtung nach Fig. 3 in einem weiteren hochgeschwenkten Zustand,
- Fig. 6: eine Draufsicht auf die Vorrichtung in Richtung des Pfeils X in Fig. 3,
- Fig. 7: einen Rotor in Draufsicht und Seitenansicht und
- Fig. 8: eine Draufsicht auf den Rahmen mit den Rotoren.

Unterhalb der Strohschüttler 2 des Mähdreschers 1 befindet sich zwischen den mit Sieben versehenen Siebkästen 3, 4 und dem Häcksler 5 die insgesamt mit 6 bezeichnete Vorrichtung zum Verteilen der Spreu. Diese Spreuverteilvorrichtung ist an zu einem Rahmen verbundenen Trägern 7 befestigt. Die unteren Enden der Träger 7 sind unterhalb des unteren Siebkastens 4 in Seitenwänden oder seitlichen Rahmenteilen 8 des Mähdreschers um eine Querachse 9 schwenkbar gelagert. Die oberen Enden der Träger 7 lassen sich in unterschiedlichen Schwenklagen in Bohrungen 10 der Seitenwände des Mähdreschers befestigen.

Auf den Trägern 7 sind axialverschiebliche Buchsen oder Führungsstücke 11 geführt und in gewünschten Stellungen durch nicht dargestellte Fixierschrauben arretierbar. Die Führungsstücke 11 sind mit Lagerkonsolen 12 versehen, in einer von denen die mit der Antriebsriemenscheibe 15 versehene Antriebswelle 14 gelagert sein kann. Das Abdeckblech 16 ist beiderseits mit Schenkeln 13 versehen, die an den Lagerkonsolen 12 befestigt sind und zur Einstellung unterschiedlicher Schwenklagen des Spreuverteilers dienen. Auf der Rückseite des Abdeckblechs 16, das gleichzeitig auch einen Tragrahmen für die Rotoren 17, 18 bildet, sind Winkelgetriebe 19, 20 befestigt, in denen die Antriebswelle 14 gelagert ist und deren rechtwinkelig zu der Antriebswelle 14 stehenden Abtriebswellen 21, 22 die Rotorwellen bilden. Im dargestellten Ausführungsbeispiel sind jeweils zwei schaufelartige Blätter 23 auf den Rotoren 17, 18 befestigt. Es können in gleichen Winkelabständen auch mehr als zwei Rotorblätter vorgesehen werden.

Die Rotoren 17, 18 sind in ihrem oberen und in ihrem einander zugewandten Bereich von zu den Rotorwellen konzentrischen Stegblechen 24, 25 eingefaßt. An die Auslaufbereiche der Stegbleche 24, 25 sind um zu den Rotorwellen parallele Achsen 26, 27 Leitbleche 28, 29 angelenkt. Diese Leitbleche sind in ihren Endbereichen mit Schraubbolzen 30, 31 versehen, die Langlöcher des Abdeckblechs 16 durchsetzen und zur Fixierung in den gewünschten Winkellagen mit Muttern, vorzugsweise Flügelmuttern, versehen sind. Die Schraubbolzen 30, 31 sind an abgewinkelten Schenkeln der Leitbleche 28, 29 befestigt.

Zur Einstellung des Abstands der Spreuverteilvorrichtung 6 von den Siebkästen 3, 4 läßt sich das buchsenartige Führungsstück 11 auf den Trägern 7 in Richtung des Doppelpfeils A verschieben und feststellen. Zur Einstellung der relativen Höhe (Doppelpfeil B) der Verteilvorrichtung 6 zu den Siebkästen 3, 4 läßt sich das hintere Ende der Träger 7 in unterschiedlichen Bohrungen 10 mit Bolzen befestigen. Die optimale Neigung der Verteilvorrichtung läßt sich durch Verschwenken in Richtung des Doppelpfeils C um die Achse der Antriebswelle 14 einstellen.

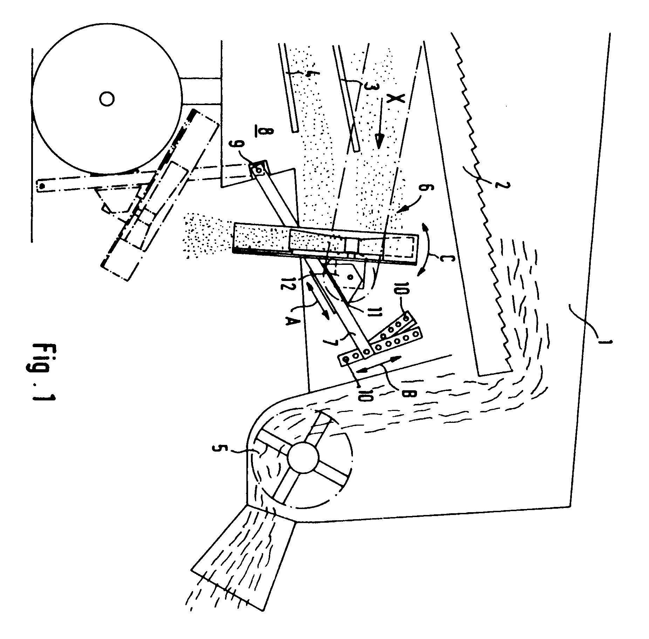

Um freien Zugang zu den Siebkästen 3, 4 zu haben, werden die freien Enden der Träger 7 von den Bohrungen 10 gelöst, so daß sich die Träger 7 mit der Verteilvorrichtung 6 in der aus Fig. 1 in strichpunktierten Linien dargestellten Weise nach unten abklappen lassen.

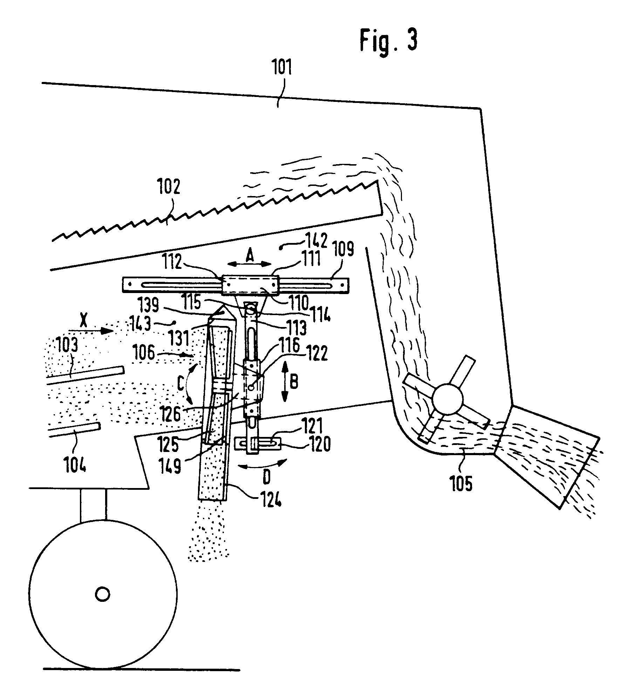

Ein weiteres Ausführungsbeispiel der Erfindung wird nachstehend anhand der Fig. 3 bis 8 beschrieben:

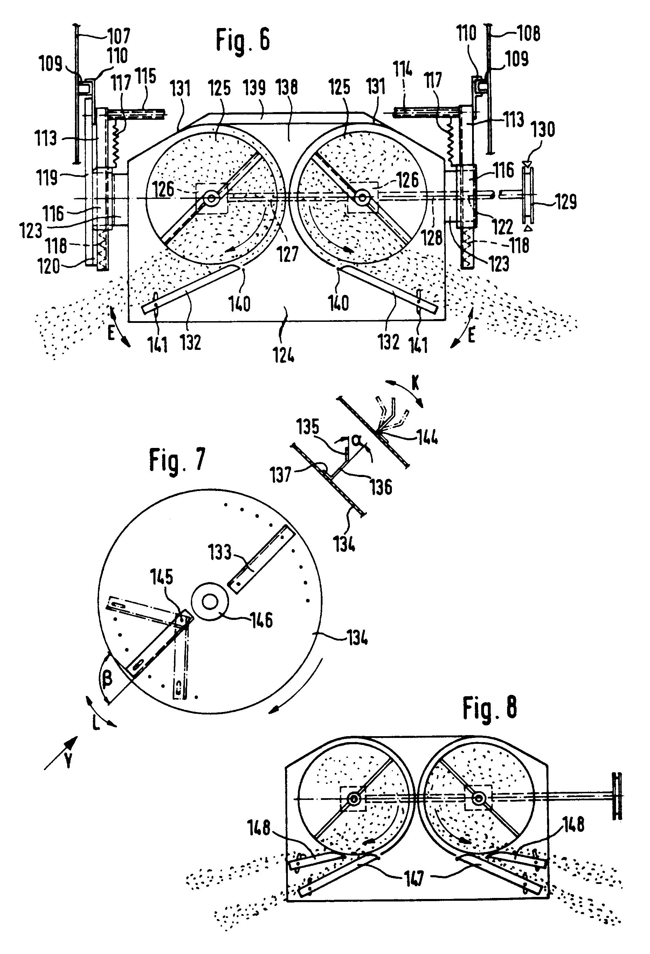

Wie aus Fig. 3 ersichtlich ist, befindet sich die insgesamt mit 106 bezeichnete Vorrichtung zum Verteilen der Spreu unterhalb der Strohschüttler 102 des Mähdreschers 101 und zwischen den mit Sieben versehenen Siebkästen 103, 104 und dem Häcksler 105. An dem Blechrahmen 124 (siehe auch Fig. 6) sind zwei Laufräder 125 in Lagerungen 126 um zueinander parallele Achsen drehbar gelagert. Der Antrieb der Laufräder 125 erfolgt über zwei Wellen 127, 128, die durch einen Keilriementrieb 129, 130 angetrieben werden. Dabei wird die Drehbewegung der Wellen 127, 128 durch Winkelgetriebe 126 in Drehbewegungen um zur Achse der Wellen 127, 128 senkrechte Achsen umgewandelt.

An der rechten und linken Seitenwand 107, 108 des Mähdreschers 101 werden unterhalb der Schüttler 102 zwei Schienen 109 horizontal oder geneigt in Längsrichtung angebracht. Auf den Schienen 109 sind zwei Schlitten 110 verschiebbar gelagert. Sie ermöglichen es, den Spreuverteiler je nach Dreschbedingungen näher an die Austrittskanten der Siebe 103, 104 heranzuführen oder weiter zu entfernen, wie der Doppelpfeil A zeigt. Nach erfolgter Einstellung werden die Schlitten 110 auf den Schienen 109 arretiert. Die Lagerung der Schlitten 110 auf den Schienen 109 ist im einfachsten Fall als Gleitlagerung gestaltet. Zur Verringerung des Reibungswiderstandes können Wälzlagerungen für Linearbewegungen vorgesehen werden. Wird nur ein kleiner Verstellbereich in Pfeilrichtung A gefordert, so können die Schienen 109 durch in der Mähdrescherwand vorgesehene Langlöcher gebildet werden.

An den Schlitten 110 sind zwei Träger 113 in einem Drehpunkt 114 oberhalb des Spreuverteilers pendelnd aufgehängt. Sie können durch eine Querstrebe 115 torsionssteif miteinander verbunden sein (Fig. 6).

Längs der Träger 113 sind zwei Konsolen 116 längsverschieblich geführt. Dies ermöglicht eine Verschiebung in vertikaler Richtung längs des Doppelpfeils B. Nach erfolgter Einstellung werden die Konsolen 116 auf den Trägern 113 arretiert. An den Trägern 113 können zusätzlich Zugfedern 117, Druckfedern 118 oder Gasdruckfedern angebracht werden (Fig. 6), die das Eigengewicht abstützen und die Höhenverstellung erleichtern.

An einem Schlitten 110 befindet sich eine Halterung 119 mit einer Klemmplatte 120. Der Träger 113 wird an der Klemmplatte 120 beispielsweise mit einer Schraubenverbindung arretiert. Innerhalb des Langlochs 121 der Klemmplatte 120 kann die Neigung des Spreuverteilers durch eine Verschwenkung um die Drehachse 114 geändert werden (siehe Doppelpfeil D). Die Halterung 119 und die Klemmplatte 120 können entfallen, wenn zwischen Schlitten 110 und Schiene 113 eine andere Möglichkeit zur Feststellung vorgesehen wird, z.B. eine Klemmverbindung im Drehpunkt 114.

Im Schwenkpunkt 122 sind zwei Halter 123 in den Konsolen 116 drehbar gelagert. Sie dienen zur Einstellung der Neigung des Tragrahmens 124 (Doppelpfeil C). Der Spreuverteiler kann um die Drehachse 122 um 360° gedreht werden. Die Arretierung erfolgt beispielsweise mit einer Klemmverbindung zwischen den Haltern 123 und den Konsolen 116.

Die geschilderten Verstellmöglichkeiten (Doppelpfeile A, B, C und D) sind voneinander unabhängig und erlauben eine optimale Anpassung an die jeweiligen Dreschbedingungen.

Wie aus Fig. 6 ersichtlich ist, sind an dem Rahmen 124 des Spreuverteilers nebeneinander zwei Schaufelräder 125 angeordnet. Es handelt sich dabei um einseitig offene Radialräder, die in axialer Richtung ansaugen und in radialer Richtung ausblasen. Zur Führung des Luftstroms sind Abdeckbleche 131 und bewegliche Leitbleche 132 vorgesehen. Die beweglichen Leitbleche 132 können um die Drehachsen 140 verschwenkt und beispielsweise mittels einer Schraubenverbindung in den Langlöchern 141 arretiert werden.

Die Schaufelräder 125 sind als einseitig offene Radialräder ausgebildet, die jeweils zwei oder mehr gerade Schaufeln 133 tragen (Fig. 7). Die Schaufeln können auch gekrümmt gestaltet sein. Der Austrittswinkel β kann 90° betragen. Er kann auch in weiten Grenzen verändert werden; hierzu dienen die in Fig. 7 dargestellten Lochreihen in der Bodenplatte 134, die radial um den Schwenkpunkt 145 angeordnet sind. Beispielsweise durch eine Bolzenverbindung, die die Löcher der Bodenplatte 134 und ein in der Schaufel 133 vorgesehenes Langloch durchgreift, kann ein bestimmter Austrittswinkel β eingestellt werden. Die Eintrittskanten 135 der auf der Bodenplatte 134 befestigten Schaufen 133 sind in Drehrichtung angewinkelt (Fig. 7, Ansicht Y), um eine sichere Aufnahme der Spreu durch die Laufräder 125 zu erreichen. Der an den angewinkelten Bereich 135 der Schaufeln 133 anschließende Bereich 136 kann sich in Achsrichtung erstrecken. In diesem Bereich 136 wird die Spreu in Rotation versetzt und nach außen geschleudert. Der letzte zum Rahmen 124 zeigende Abschnitt 137 der Schaufel 133 kann wieder in Drehrichtung zeigen.

An der Rückseite der Bodenplatte 134 können Räumleisten 149 fest angebracht werden, um zu verhindern, daß sich größere Mengen Spreu zwischen Laufrad und Rahmen ablagern. Die Austrittswinkel β und die Anstellwinkel α können bei Verwendung von lösbaren Schaufeln 133 durch Schwenken auf der Bodenplatte verändert werden (Doppelpfeile L und K). Bei einer vereinfachten Ausführung des Laufrades entfallen Bodenplatte und Räumleisten; die Schaufeln werden dann an der Nabe 146 fest oder verstellbar angebracht.

Beim Betrieb der Vorrichtung drehen sich die auf den Wellenenden der Winkelgetriebe 126 fliegend gelagerten Laufräder 125 mit entgegengesetztem Drehsinn. Die Winkelgetriebe 126 sind mit einer Welle 127 verbunden. Angetrieben wird der Spreuverteiler mittels Riemen 130 oder mittels Hydro- oder Elektromotor oder einer biegsamen Welle vom Mähdrescher. Anstelle der Winkelgetriebe 126 kann auch ein gekreuzter Riementrieb oder Zahnradtrieb eingesetzt werden, um entgegengesetzten Drehsinn der Laufräder zu erreichen. Bei Verwendung von Hydro- oder Elektromotoren können die Laufräder 125 direkt auf den Wellenenden der Motore gelagert werden. Eine Drehzahlverstellung der Laufräder 125 kann mit stufenlos verstellbaren Antrieben erreicht werden.

Die Laufräder 125 sind radial von je einem Abdeckblech 131 umgeben, welches mit dem Rahmen 124 fest verbunden ist. Um zu verhindern, daß sich in dem keilförmigen Freiraum zwischen den Abdeckblechen 131 größere Mengen Spreu ablagern, wird dieser vorne durch eine ebene Platte 138 und oben durch eine dach- oder halbkreisförmige Platte 139 verkleidet. An den Abdeckblechen 131 schließt sich an jeder Seite ein Leitblech 132 an. Es wird zur Einstellung der Streubreite um die Achse 140 geschwenkt (E) und in den Langlöchern 141 des Rahmens 124 arretiert. Nach Verlassen der Siebe 103, 104 wird die Spreu durch die Laufräder 125 in Drehung versetzt, durch die Abdeckbleche 131 geführt und im Bereich der Leitbleche 132 durch Fliehkräfte und den erzeugten Luftstrom nach außen geschleudert. Wenn erforderlich, können für eine gleichmäßigere Verteilung auch mehrere feste oder verstellbare Leitbleche 147, 148 pro Laufrad 125 gefächert angeordnet werden (Fig. 6).

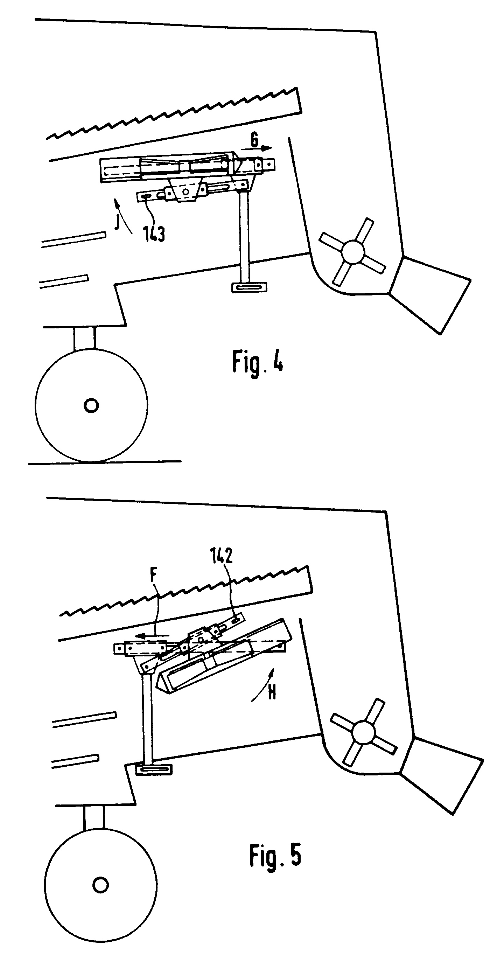

Bei Wartungsarbeiten am Siebkasten oder bei Siebwechsel schiebt man den Spreuverteiler je nach Einbauverhältnissen nach vorn (F; Fig. 5) oder nach hinten (G; Fig. 4), löst die Verbindung an der Klemmplatte 120, klappt ihn (H, J) unter die Schüttler 102 und arretiert ihn in den Bohrungen 142 und 143 (Fig. 5 und 4) in der Mähdrescherwand. Zur Verringerung des Kraftaufwandes kann der Spreuverteiler durch Federn abgestützt werden, beispielsweise durch eine gewundene Biegefeder im Drehpunkt 114.

Zur Verbesserung des Bedienungskomforts kann eine Fernbedienung installiert werden. In diesem Fall erfolgt die Einstellung der Funktionen A bis L von der Fahrerkabine aus mittels Seilzug, Bowdenzug, mechanischem Ubertragungsgestänge, Hydraulikzylinder oder elektrischem Stellmotor.

## Patentansprüche

1. Vorrichtung für Mähdrescher zum Verteilen der Spreu, bestehend aus zwei gegenläufig angetriebenen Rotoren (17, 18) mit mindestens zwei schaufelartigen Blättern (23), wobei die Rotoren (17, 18) in einem mit einem hinteren Abdeckblech (16) versehenen Tragrahmen nebeneinander um zueinander parallele Achsen (21, 23) drehbar gelagert sind und wobei die Rotoren (17, 18) von einer gemeinsamen querverlaufenden Antriebswelle (14) über Winkelgetriebe (19, 20) angetrieben sind, dadurch gekennzeichnet, daß der Tragrahmen auf zwei seitlichen Trägern (7) über schlittenartige Führungen (11) verschieblich geführt und feststellbar ist, deren unteren Enden in Seitenwänden des Gehäuses oder seitlichen Trägern des Mähdreschers (1) unterhalb des unteren Siebkastens (4) schwenkbar gelagert und deren oberen Enden in Höhe des oberen Siebkastens (3) an diesen Seitenwänden oder Trägern in unterschiedlichen Schwenklagen fixierbar sind, und daß der Tragrahmen um die Achse der Antriebswelle (14) schwenkbar und in verschiedenen Schwenklagen relativ zu den Führungen (11) feststellbar ist.

2. Vorrichtung nach Anspruch 1, dadurch gekennzeichnet, daß die Rotoren (17, 18) in ihren oberen und in ihren einander zugewandten Bereichen von etwa konzentrischen und rechtwinkelig an dem Abdeckblech (16) befestigten Stegblechen (24, 25) eingefaßt sind.

3. Vorrichtung nach Anspruch 2, dadurch gekennzeichnet, daß die Stegbleche (24, 25) an ihren Auslaufkanten gelenkig mit Leitblechen (28, 29) verbunden sind, deren Neigungswinkel einstellbar ist.

4. Vorrichtung nach einem der Ansprüche 1 bis 3, dadurch gekennzeichnet, daß die Antriebswelle (14) über eine Riemenscheibe (15) durch Keilriemen angetrieben ist.

5. Vorrichtung nach einem der Ansprüche 1 bis 3, dadurch gekennzeichnet, daß zum Antrieb der Rotoren ein Hydro- oder Elektromotor vorgesehen ist.

6. Vorrichtung für Mähdrescher zum Verteilen der Spreu, bestehend aus zwei gegenläufig angetriebenen Rotoren (125) mit mindestens zwei schaufelartigen Blättern, dadurch gekennzeichnet, daß ein mit einem hinteren Abdeckblech versehener Tragrahmen vorgesehen ist, in dem die Rotoren (125) nebeneinander um zueinander parallele Achsen drehbar gelagert sind, daß der Tragrahmen (124) auf zwei Trägern (113) verschieblich geführt und feststellbar ist, daß die Träger (113) an einem Ende an Schlitten (110) schwenkbar gelagert sind, die in mit dem Mähdrescher (101) verbundenen Schienen (109) verstellbar geführt sind, und daß die anderen Enden der Träger (113) in unterschiedlichen Schwenklagen fixierbar sind.

7. Vorrichtung nach Abspruch 6, dadurch gekennzeichnet, daß die Rotoren (125) von einer gemeinsamen querverlaufenden Antriebswelle (127) über Winkelgetriebe (126) angetrieben sind und daß der Rahmen (124) auf den Trägern (113) über schlittenartige Führungen verschieblich und um die Achse der Antriebswelle (128) schwenkbar und in verschiedenen Schwenklagen relativ zu den Führungen feststellbar ist.

8. Vorrichtung nach Anspruch 6 oder 7, dadurch gekennzeichnet, daß die Rotoren (125) in ihren oberen und in ihren einander zugewandten Bereichen von etwa konzentrischen und rechtwinkelig mit dem Rahmen (124) befestigten Abdeckblechen (131) eingefaßt sind.

9. Vorrichtung nach Anspruch 8, dadurch gekennzeichnet, daß die Abdeckbleche (131) an ihren Auslaufkanten gelenkig mit Leitblechen (132, 147, 148) verbunden sind, deren Neigungswinkel einstellbar ist.

10. Vorrichtung nach einem der Ansprüche 6 bis 9, dadurch gekennzeichnet, daß die Antriebswelle (128) über eine Riemenscheibe (129) durch Keilriemen (130) angetrieben ist.

11. Vorrichtung nach einem der Ansprüche 6 bis 10, dadurch gekennzeichnet, daß zum Antrieb der Rotoren (125) ein Hydromotor oder ein Elektromotor vorgesehen ist.

12. Vorrichtung flach einem der Ansprüche 6 bis 11, dadurch gekennzeichnet, daß die Eintrittskanten (135) der Schaufeln (133) zur sicheren Spreuaufnahme in Drehrichtung abgewinkelt sind.

13. Vorrichtung nach Anspruch 12, dadurch gekennzeichnet, daß die Abwinkelung der Eintrittskanten durch Drehen um die Längsachse (144) der Schaufel (133) verändert werden kann.

14. Vorrichtung nach einem der Ansprüche 6 bis 13, dadurch gekennzeichnet, daß der Austrittswinkel (β) der Spreu durch Schwenken der Schaufeln (133) um eine Achse (145) parallel zur Drehachse des Laufrades variiert werden kann.

15. Vorrichtung nach einem der Ansprüche 6 bis 14, dadurch gekennzeichnet, daß zur Verbesserung des Bedienungskomforts eine Fernbedienung für einzelne oder alle Verstellmöglichkeiten (A bis L) der Vorrichtung vorgesehen ist.

16. Vorrichtung nach Anspruch 15, dadurch gekennzeichnet, daß die Betätigung der Verstellmöglichkeiten (A bis L) von der Fahrerkabine aus mittels Seilzug, Bowdenzug, mechanischem Übertragungsgestänge, Hydraulikzylinder oder elektrischem Stellmotor erfolgt.

17. Vorrichtung nach einem der Ansprüche 6 bis 13, dadurch gekennzeichnet, daß an den Laufrädern (125) Räumleisten (149) angebracht sind.

## Claims

1. Device for harvester threshers for the distribution of chaff, comprising two counter-rotationally driven rotors (17, 18) with at least two vane-like blades (23), said rotors (17, 18) being pivot-mounted on parallel shafts (21, 23) such that they are arranged adjacent to each other in a baseframe provided with a rear cover plate (16), and being driven via angular gear units (19, 20) by a common transverse drive shaft (14), characterised in that the baseframe can be displaced and fixed within slot-like guides (11) in two lateral supports (7), the bottom ends of which guides (11) are pivot-mounted in side walls of the housing or lateral supports of the harvester thresher (1) below the bottom screening tray (4), and the top ends of which can be fixed at the level of the upper screen tray (3) to said side walls or supports at various angular positions, and that the baseframe can be pivoted around the axis of the drive shaft (14) and fixed at various swivel angles relative to the guides (11).

2. Device according to Claim 1, characterised in that the rotors (17, 18) are enclosed at the top and also at their respective interface zones by approximately concentric web plates (24, 25) which are secured at right angles to the cover plate (16).

3. Device according to Claim 2, characterised in that the web plates (24, 25) are linked at their discharge edges to articulated guide plates (28, 29), the angle of inclination of which is adjustable.

4. Device according to one of Claims 1 to 3, characterised in that the drive shaft (14) is driven by a V-belt via a V-belt pulley (15).

5. Device according to one of Claims 1 to 3, characterised in that the drive unit of the rotors is a hydraulic or an electric motor.

6. Device for harvester threshers for the distribution of chaff, consisting of two counter-rotationally driven rotors (125) with at least two vane-like blades, characterised in that a baseframe with a rear cover plate is provided in which the rotors (125) are pivot-mounted on adjacent, parallel shafts, that the baseframe (124) can be displaced and fixed on two supports (113), that the supports (113) are pivot-mounted at one end to carriages (110) which are mounted in rails (109) connected to the harvester thresher (101) to allow displacement, and that the other ends of the supports (113) can be fixed at various swivel angles.

7. Device according to Claim 6, characterised in that the rotors (125) are driven via angular gear units (126) by a common transverse drive shaft (127), and that the baseframe (124) on the supports (113) can be shifted via carriage-like guides, swivelled around the axis of the drive shaft (128) and fixed at various swivel angles relative to the guides.

8. Device according to Claim 6 or 7, characterised in that the rotors (125) are enclosed at the top and also at their respective interface zones by approximately concentric cover plates (131) which are secured at right angles to the baseframe (124).

9. Device according to Claim 8, characterised in that the cover plates (131) are linked at their discharge edges to articulated guide plates (132, 147, 148), the angle of inclination of which is adjustable.

10. Device according to one of Claims 6 to 9, characterised in that the drive shaft (128) is driven by a V-belt (130) via a V-belt pulley (129).

11. Device according to one of Claims 6 to 10, characterised in that the drive unit of the rotors (125) is a hydraulic or an electric motor.

12. Device according to one of Claims 6 to 11, characterised in that the leading edges (135) of the blades (133) are angled in the direction of rotation to ensure reliable chaff collection.

13. Device according to Claim 12, characterised in that the angle of the leading edges may be modified by turning the blades (133) around their longitudinal axis (144).

14. Device according to one of Claims 6 to 13, characterised in that the exit angle (β) of the chaff may be varied by rotating the blades (133) around an axis (145) parallel to the axis of rotor rotation.

15. Device according to one of Claims 6 to 14, characterised in that a remote control for individual or all adjustment possibilities (A to L) is provided in the device to improve ease of operation.

16. Device according to Claim 15, characterised in that actuation of the adjustment means (A to L) may be performed from the driver's cabin by cable control, Bowden control, mechanical transmission linkage, hydraulic cylinders or electric positioning motor.

17. Device according to one Claims 6 to 13, characterised in that wiper strips (149) are attached to the rotors (125).

## Revendications

1. Dispositif pour moissoneuse-batteuse pour la distribution de balle, consistant en deux rotors (17, 18) entraînés en sens contraire, présentant au moins deux pales (23) à la manière d'aubes, les rotors (17, 18) étant logés en juxtaposition dans un cadre porteur pourvu d'une tôle de protection arrière (16) de manière à pouvoir pivoter autour d'axes réciproquement parallèles (21, 23), lesdits rotors (17, 18) étant entraînés par un arbre moteur (14) commun s'étendant transversalement par l'intermédiaire de transmissions angulaires (19, 20), caractérisé en ce que le cadre porteur est guidé de manière à pouvoir se déplacer et à être bloqué sur deux supports (7) latéraux dans des guidages (11) à la manière d'un chariot, dont les extrémités inférieures sont logées dans des parois latérales du bâti ou des supports latéraux de la moissoneuse-batteuse (1) au-dessous de la caisse de criblage inférieure et dont les extrémités supérieures peuvent être fixées à la hauteur de la caisse de criblage supérieure (3) auxdites parois latérales ou auxdits supports en différentes positions de pivotement, et que le cadre porteur peut être fixé de manière à pouvoir pivoter autour de l'axe de l'arbre moteur (14) et en différentes positions de pivotement par rapport aux guidages (11).

2. Dispositif selon la revendication 1, caractérisé en ce que les rotors (17, 18) présentent en leurs zones supérieures et dans leurs zones tournées l'une vers l'autre des profilés en tôle (24, 25) fixés à peu près concentriquement et à angle droit à la tôle de protection (16).

3. Dispositif selon la revendication 2, caractérisé en ce que les profilés en tôle (24, 25) sont reliés à leurs arêtes d'extrémité par une articulation à des tôles de guidage (28, 29), dont l'angle d'inclinaison peut être réglé.

4. Dispositif selon les revendications 1 à 3, caractérisé en ce que l'arbre moteur (14) est entraîné par l'intermédiaire d'un disque à courroie (15) par des courroies crantées.

5. Dispositif selon l'une quelconque des revendications 1 à 3, caractérisé en ce que pour l'entraînement des rotors un moteur hydraulique ou électrique est prévu.

6. Dispositif pour moissoneuse-batteuse pour la distribution de balle, consistant en deux rotors (125) entraînés en sens contraire comportant au moins deux pales à la manière d'aubes, caractérisé en ce qu'un cadre porteur présentant une tôle de protection arrière est prévu dans lequel les rotors (125) sont juxtaposés et logés de manière à pouvoir pivoter autour d'axes réciproquement parallèles, que le cadre porteur (124) est guidé de manière à pouvoir se déplacer et à être arrêté sur deux supports (113), que les supports (113) sont logés de manière à pouvoir pivoter dans des chariots (110) à une extrémité, qui sont guidés de manière à pouvoir être déplacés dans des rails (109) raccordés à la moissoneuse-batteuse (101), et que les autres extrémités des supports (113) peuvent être fixées en différentes positions de pivotement.

7. Dispositif selon la revendication 6, caractérisé en ce que les rotors (125) sont entraînés par un arbre moteur (127) commun s'étendant en transversal par l'intermédiaire de transmissions angulaires (126) et que le cadre (124) peut être arrêté sur les supports (113) de manière à pouvoir être déplacé dans les guidages à la manière de chariots et de manière à pouvoir être pivoté autour de l'axe de l'arbre moteur (128) et en diverses positions de pivotement par rapport aux guidages.

8. Dispositif selon les revendications 6 ou 7, caractérisé en ce que les rotors (125) en leurs zones supérieures et leurs zones tournées l'une vers l'autre sont bordés par des tôles de protection à peu prés concentriques et fixées à angle droit au cadre (124).

9. Dispositif selon la revendication 8, caractérisé en ce que la tôle de protection (131) est raccordée à ses arêtes d'extrémité par une articulation à des tôles de guidage (132, 147, 148) dont l'angle d'inclinaison est réglable.

10. Dispositif selon l'une quelconque des revendications 6 à 9, caractérisé en ce que l'arbre moteur (128) est entraîné par l'intermédiaire d'un disque à courroie (129) par des courroies crantées (130).

11. Dispositif selon l'une quelconque des revendications 6 à 10, caractérisé en ce que pour l'entraînement des rotors (125) un moteur hydraulique ou un moteur électrique est prévu.

12. Dispositif selon l'une quelconque des revendications 6 à 11, caractérisé en ce que les arêtes d'entrée (135) des aubes (133) sont courbées en direction de la rotation pour recevoir le balle en toute sécurité.

13. Dispositif selon la revendication 12, caractérisé en ce que la courbure des arêtes d'entrée peut être modifiée par la rotation de l'aube (133) autour de l'axe longitudinal (144).

14. Dispositif selon l'une quelconque des revendications 6 à 13, caractérisé en ce que l'angle de sortie (β) de la balle peut être varié par le basculement de l'aube (133) autour d'un axe (145) parallèle à l'axe de rotation du rotor.

15. Dispositif selon l'une quelconque des revendications 6 à 14, caractérisé en ce que pour l'amélioration du confort de service, une commande à distance est prévue pour diverses ou toutes les possibilités de réglage (A à L) du dispositif est prévue.

16. Dispositif selon la revendication 15, caractérisé en ce que l'actionnement des possibilités de réglage (A à L) se fait à partir de la cabine du conducteur au moyen d'une commande par câble, d'une commande bowden, d'une tringlerie de transmission mécanique, d'un vérin ou d'un servomoteur électrique.

17. Dispositif selon l'une quelconque des revendications 6 à 13, caractérisé en ce que des barres d'évacuation (149) sont montées sur les rotors (125).
